# EUROPÄISCHE PATENTSCHRIFT

(11) **EP 4 424 760 B1**
(45) Veröffentlichungstag und Bekanntmachung des Hinweises auf die Patenterteilung: **09.07.2025**
(21) Anmeldenummer: 24158539.7
(22) Anmeldetag: 20.02.2024
(51) Int. Cl.: C08J 11/24, C07F 7/08

(54) **GEWINNUNG VON SILOXANZYKLEN**
RECOVERY OF SILOXANE CYCLES
RÉCUPÉRATION DE CYCLES SILOXANE

(30) Priorität: 02.03.2023 EP 23159727
(43) Veröffentlichungstag der Anmeldung: 04.09.2024
(73) Patentinhaber: Evonik Operations GmbH, 45128 Essen (DE)
(72) Erfinder: Knott, Wilfried, 45355 Essen (DE); Dudzik, Horst, 45326 Essen (DE); Henning, Frauke, 45259 Essen (DE)
(74) Vertreter: Evonik Patent Association

(56) Entgegenhaltungen:
- VORNOKOV, SHABAROVA, ZURNAL OBSCEJ CHIMII, vol. 29, 31 December 1959 (1959-12-31), pages 1501 - 1507, XP009545415, ISSN: 0044-460X

## Beschreibung

Die Erfindung liegt auf dem Gebiet der Silikone und des Recyclings von Silikonen. Insbesondere betrifft die Erfindung ein Verfahren zur Gewinnung von Siloxanzyklen aus Abfallsilikonen.

Dem Nachhaltigkeitskonzept folgend, nimmt die Bedeutung der Verwertung bzw. Wiederverwertung von Abfallprodukten aus den Wirtschaftskreisläufen immer mehr zu. Das trifft auch auf die Verwertung von Silikonabfällen, die im Rahmen dieser Erfindung auch als "End-of-Life"-Silikone bezeichnet werden, zu. Es besteht daher der Wunsch, auch in diesem Felde Fortschritte zu erzielen. Unabhängig davon zeigt sich auf der anderen Seite ein steigender Bedarf und damit eine stetige Nachfrage an organisch funktionalisierten Siloxanen für Anwendungen zum Beispiel in den Bereichen Bau, Elektrik und Elektronik, Automobil, Gesundheitswesen und Kosmetik sowie zahlreichen anderen Anwendungsgebieten. Siloxanzyklen sind dabei als Basismaterialien zur Erzeugung einer Vielzahl an organisch funktionalisierten Siloxanen von erheblicher Bedeutung.

Siloxanzyklen können z.B. als Folgeprodukte aus der industriellen Müller-Rochow-Synthese erhalten werden, die als Hochtemperaturprozess allerdings einen erheblichen Energiebedarf aufweist.

Siloxanzyklen sind im Rahmen dieser Erfindung die monozyklischen, aus direkt miteinander verknüpften D-Einheiten (= Dimethylsiloxy-Einheiten) bestehenden, ringförmigen Siloxanoligomere, insbesondere D₃ (Hexamethylcyclotrisiloxan), D₄ (Octamethylcyclotetrasiloxan), D₅ (Decamethylcyclopentasiloxan) und/oder D₆ (Dodekamethylcylohexasiloxan), wobei D₄ (Octamethylcyclotetrasiloxan) und/oder D₅ (Decamethylcyclopentasiloxan) die am meisten bevorzugten Siloxanzyklen im Sinne dieser Erfindung sind.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Rupasinghe und Furgal haben in einem Übersichtsartikel versucht, alle bis Stand Juli 2021 verfügbaren Arbeiten zur Degradation und Depolymerisation von Polysiloxanen zusammenzutragen (Polymer international, 71(5), 521-531).

Als eine besondere Herausforderung stellt sich das Recycling von Silikonkautschukabfällen dar, weil man dabei stets die im Silikonkautschuk eingearbeiteten Füllstoffe von der Silikonmatrix trennen muss. Erschwert wird diese Trennaufgabe durch die starken Wechselwirkungen zwischen den Füllstoffpartikeln und den Polydimethylsiloxanketten.

So diskutieren W. Huang et al. (Polymer 43, 7295-7300 (2002)) im Zusammenhang mit der Rückgewinnung von Monomeren und Füllstoffen aus Hochtemperatur vernetzten Silikonkautschuk (HTV) durch kombinierte Wirkung von Lösungsmitteln, Base und Füllstoffen die Schwierigkeit, ein effektives Lösungsmittel zu finden, das auch noch die Depolymerisation der Silikonmatrix fördert. Demnach ist es nicht einfach, Siloxanzyklen aus einer äquilibrierten Depolymerisationsmischung abzuziehen und dabei Lösungsmittel und Füllstoffe zurückzulassen. Wird das Lösungsmittel vor der Abtrennung der Füllstoffe abgezogen, kann das verbleibende Siloxan nicht einfach depolymerisiert werden, was zwingend niedrige Ausbeuten an Siloxanzyklen zur Folge hat.

Wie schwierig sich die Depolymerisation des zu recyclenden Siloxans nach Entfernen des zuvor zur Siloxanquellung eingesetzten Lösungsmittels gestaltet, lässt sich beispielsweise der DE 19502393 A1 entnehmen, die in ihrem Beispiel 1 ausführt, dass man von einem additionsvernetzten Polydimethylsiloxankautschukvulkanisat nach dessen unter Rückflussbedingungen erfolgter Quellung in einem Gemisch bestehend aus Hexan, Dichlormethan und PNCl₂ die Lösungsmittel abdestilliert und das zurückbleibende Gel bei 650°C für eine Stunde pyrolysiert, so dass als Pyrolyseprodukt ein Gemisch zyklischer Siloxane entsteht.

Huang et al. (I.c.) berichten, dass eine Mischung aus Diethylamin, Methanol und Hexan sowohl sehr effektiv sei, die KOH-katalysierte Depolymerisation eines mit SiO₂ und Al₂O₃ gefüllten HTV-Silikonkautschuks herbeizuführen als auch die besagten Füllstoffe vollständig vor dem Abziehen der Siloxanzyklen und der Solventien zu entfernen.

Die diffizile Handhabung dieses komplexen Lösungsmittelgemisches beschreiben die Autoren anhand des experimentellen Befundes, dass man zur Durchführung einer erfolgreichen Depolymerisation eine dezidierte Reihenfolge beim Einsatz der Solventien einhalten muss. Erwärmt man den HTV-Silikonkautschuk in Methanol unter Zusatz von Kaliumhydroxid und fügt dann Diethylamin hinzu, so löst sich der Kautschuk nach kurzer Zeit auf, bildet jedoch eine Emulsion und keine Dispersion. Zielführend ist demgegenüber nur das Rückflusssieden des Silikonkautschuks in Diethylamin unter Kaliumhydroxidzusatz mit anschließender Zugabe von Methanol, wobei sich dabei schnell eine Suspension der Füllstoffpartikel im verflüssigten Siloxan bildet.

Ebenfalls sehen sich die Autoren mit der prinzipiellen Notwendigkeit konfrontiert, die Füllstoffpartikel aus der gebildeten Suspension durch Filtration entfernen zu müssen. Ohne die Entfernung der Feststoffanteile erbringt eine Vakuumdestillation lediglich 7 Prozent destillierbarer Siloxane bezogen auf den eingesetzten Silikonkautschuk gegenüber 32,1 Prozent nach Entfernen der Feststoffanteile.

Der Zielsetzung verhaftet, die Füllstoffpartikel vollständig von der Siloxanmatrix zu separieren, fügen Huang et al. dann noch Methanol hinzu, um die Aggregation der feindispergierten polaren Füllstoffpartikel zu erreichen und deren Abtrennung durch Filtration zu erleichtern.

Ohne weitere Erklärung ist dem Fachmann bewusst, dass diese komplizierte Methode mit ihren multiplen Einflussparametern nicht geeignet ist, erfolgreichen Eingang in die industrielle Praxis zu nehmen.

Ikeda et al. (Green Chemistry, 2003,5, 508-511) greifen die Resultate von Huang et al. auf und substituieren in dem komplexen Solvenssystem bestehend aus Hexan, Diethylamin und Methanol Kaliumhydroxid durch Tetramethylammoniumhydroxid, mit der Intention, die aus der Depolymerisation von Silikonkautschuk rückisolierten Füllstoffanteile (Siliziumdioxid und Aluminiumoxid) erneut verwenden zu können, denn aus Huang's Arbeit war weiterhin deutlich geworden, dass Kaliumhydroxid die Oberfläche der Feststoffpartikel bedeckt, was zu einer Herabsetzung der Thermostabilität von hiermit gefüllten, frischen Silikonkautschukrezepturen führt und somit prohibitiv für deren direkten Wiedereinsatz ist.

Oku et al. (Polymer 43, 7289-7293 (2002)) stellen ebenfalls auf die Depolymerisation des bereits in den Untersuchungen von Huang und Ikeda verwendeten, radikalisch-vernetzten, mit SiO₂ und Al₂O₃ gefüllten Silikonkautschuks zu Siloxanzyklen ab, wobei Kaliumhydroxid in Toluol und auch Kaliumhydroxid kombiniert mit Puffersäuren ohne Lösungsmittel zum Einsatz kommen. Gute Zyklenausbeuten von bis zu 84 Prozent werden dabei insbesondere durch die stöchiometrische Kombination von KOH mit bestimmten Puffersäuren wie Kaliumdihydrogenphosphat KH₂PO₄ und dem Monokaliumsalz der Terephthalsäure p-KOOC(C₆H₄)COOH erzielt, wobei die Puffersäuren erst nach der Auflösung des Silikonkautschuks und vor der Abdestillation der Siloxanzyklen hinzugefügt werden.

Die Okus Arbeit zu Grunde liegenden, idealen Laborbedingungen berücksichtigend, ist es leicht einzusehen, dass echte Silikonabfälle mit ihrer Bandbreite an gänzlich anderen als den dort untersuchten sauren bzw. neutralen Füllstoffen SiO₂ und Al₂O₃, das heißt, insbesondere mit basischen Füllstoffen wie zum Beispiel basischen Oxiden oder Carbonaten und dabei noch mit unterschiedlichen Gehaltsanteilen beaufschlagt sind, was in der Praxis die stöchiometrische Einstellung der vorgeschlagenen Puffergemische erschwert oder im Regelfall unmöglich macht.

Vornokov und Shabarova beschreiben in Zh. Obshch. Khim.1959,29,1528-1534 (Russian Journal of General Chemistry 1959, 29, 1528-1534) die Herstellung von Organoalkoxysilanen durch Spaltung von Organosiloxanen mit C₄- bis C₁₂-Alkoholen unter basischen Bedingungen, wobei Alkalimetallhydroxide, Alkalimetallalkoholate oder die Alkalimetalle selbst zum Einsatz gelangen. Die Autoren betonen die Notwendigkeit, Wasser aus dem Reaktionssystem mit Hilfe wasserunlöslicher aber Azeotrope bildender Solventien oder noch mehr bevorzugt durch den Einsatz weiterer, wasserentziehender Mittel zu entfernen. Vornokov stellt aus linearen, verzweigten oder zyklischen Organosiloxanen durch Umsetzung mit primären oder sekundären Alkoholen, die Siedepunkte über 100°C haben, in Gegenwart von 1 bis 10 Molprozent eines Hydroxids oder Alkoholats unter den Bedingungen einer kontinuierlichen azeotropen Destillation, bei der inerte Lösungsmittel, die nicht mit Wasser mischbar sind wie Toluol oder Benzol zum Einsatz gelangen, Organoalkoxysilane her. Die kontinuierliche azeotrope Destillation dient dabei unter Verwendung eines Wasserabscheiders der Wasserentfernung.

Alkohole wie Methanol und insbesondere Ethanol, die Siedepunkte unterhalb 90°C aufweisen, kann Vornokov auf diese Weise jedoch nicht umsetzen. Hierzu bedient er sich wasserentziehender Agenzien wie vorzugsweise der korrespondierenden Tetraalkoxysilane (Tetramethoxy- bzw. Tetraethoxysilan), die gemäß Vornokow mit dem Wasser zu Siliziumdioxid und dem entsprechenden Alkohol abreagieren.

Für die Herstellung von Alkoxysiloxanen weist die Publikation hingegen keinen Lösungsweg auf, denn für den Fachmann verständlich würde insbesondere der Verbleib hochsiedender Tetraalkoxysilane (zum Beispiel Tetraethoxysilan Kp. 168°C) sowie der daraus entstehenden Kondensationsprodukte einen erheblichen Trenn- und Reinigungsaufwand nach sich ziehen.

Chang et al. (J. Polym. Res. 2005, 12, 433-438) haben sich der nukleophilen Spaltung quervernetzter Polysiloxane zu Gewinnung zyklischer Siloxanmonomere gewidmet, wobei sie zunächst ein vernetztes, gefülltes Polydimethylsiloxan wahlweise in der jeweils 4 bis 5fachen Menge an Tetrahydrofuran, Toluol oder Diethylamin bei Raumtemperatur über Nacht quellen ließen und die so gequollenen Proben danach mit separat vorbereiteten, homogenen Lösungen von Kaliumhydroxid in Dimethylamin beaufschlagt und unter Rühren bei Raumtemperatur gelöst haben. In Zeiträumen von 0,4 bis 4 Stunden beobachteten die Autoren komplette Auflösung der Silikongummibestandteile. Die nach 25 Stunden Reaktionszeit bestimmten Ausbeuten an zyklischen Produkten lagen im Bereich von 10 Gew.-% bis 77 Gew.-%., wobei die Ausbeute des in Diethylamin durchgeführten Auflösungsexperiments diejenigen Ausbeuten übertraf, die man in den Tetrahydrofuran, Tetrahydrofuran/Toluol und Toluol-Solvenssystemen erzielt hatte.

### Vu et al. ( ChemRxiv (2023) 1-8, 2023, CODEN: CHEMWF; ISSN: 2573-2293

URL: https://chemrxiv.org/engage/chemrxiv/public-dashboard) beschreiben das Recycling von Silikonabfällen zu zyklischen Siloxanen, wobei die industriellen Silikonabfälle niedrigviskose, ungefüllte Silikonöle darstellen, die hauptsächlich aus D-Einheiten bestehen und Verunreinigungen wie Si-H, H₂O, HCl, AlCl₃ neben anderen enthalten. Als Depolymerisationsreagenz werden mehrzähnige Ligand Kaliumsilanolat-Komplexe angenommen, unter denen vorzugsweise ein 18-Krone-6-Kronenether-Kaliumsilanolat-Komplex als auch ein endmethylierter Polyethylenglykol- Kaliumsilanolat-Komplex, in dem der Polyether eine mittlere Molmasse von 500 g/ mol aufweist, eingesetzt werden. Da die Viskosität der Reaktionsmatrizes über den Verlauf der unter den Bedingungen einer Vakuumdestillation zwischen 150 und 170°C und 5 mbar Druck vorgenommenen Depolymerisation so sehr steigt, dass sie ein Rühren der Reaktionsmasse unmöglich macht, fügen die Autoren 10 Gewichtsprozent Octadecanol hinzu. Es wird spekuliert, dass der Fettalkoholzusatz effektiv der Bildung von über T-Einheiten verknüpften Siloxankörpern entgegenwirkt, die aus der dehydrogenativen Kondensation zwischen SiH und SiOH-Gruppen entstehen können, indem sich n-Octadecanol selbst mit den vorhandenen SiH-Gruppen dehydrogenativ umsetzt.

So interessant alle vorgenannten Befunde sind, so bieten sie nicht den Lösungsweg für die Aufgabe, beliebige Abfallsilikone, wie insbesondere auch gefüllte End-of-Life-Silikonkautschuke und dabei auch vorzugsweise die mit basischen Füllstoffen gefüllten Systeme, in wirtschaftlicher und zugleich Ressourcen schonender Weise zu Siloxanzyklen zu depolymerisieren. Insbesondere erweist sich die Verwendung von Aminbasen im Depolymerisationsschritt als technische Herausforderung, da es gilt, deren Mitriss in die Siloxanzyklen selbst in kleinsten Mengen zu vermeiden. Eine Vielzahl von Silikonzwischen- und Endprodukten wird durch die säurekatalysierte Äquilibrierung gewonnen, die, weil sie auf einen minimalen Säureeinsatz optimiert ist, höchst empfindlich bereits von kleinen Konzentrationen an Basen beeinträchtigt wird. Unter diesem Aspekt ist auch die von Vu et al. beschriebene Methodik zu sehen. Zur Vermeidung des von den Autoren als sehr effektiv aber gefährlich eingestuften Kronenethers verwenden sie als Ersatz ein endmethyliertes Polyethylenglykol mit einer mittleren Molmasse von 500 g/ mol, das heißt, im niedermolekularen Bereich dieses Polyethers sind Bestandteile von Ethoxylaten vertreten, die unter den harschen Bedingungen der dort beschriebenen Vakuumdestillation zusammen mit den Siloxanzyklen flüchtig sind. Polyether und niedere Ethoxylate stören jedoch ähnlich wie Aminbasen die technisch bedeutsame, säurekatalysierte Äquilibrierung. Die Autoren ziehen als experimentellen Beleg einer Wiederpolymerisierbarkeit der gewonnenen Siloxanzyklen daher auch nur die basenkatalysierte (speziell die KOSiMe₃-katalysierte) Äquilibrierung heran.

Vor diesem Hintergrund stellte sich die technische Aufgabe, ein neues Verfahren zu finden, das es gestattet, Siloxanzyklen in möglichst reiner Form im Produktionsmaßstab aus einer beliebigen Bandbreite an Abfallsilikonen, seien es z.B. Silkonöle oder deutlich herausfordernder z.B. auch gefüllte, hochtemperaturvernetzte Silikonkautschuke, zu gewinnen und dabei auf den Einsatz komplexer Lösungsmittelsysteme sowie extremer Reaktionstemperaturen, wie sie zum Beispiel in der DE 19502393 A1 beschrieben sind, verzichtet.

Die Lehre der noch nicht offengelegten EP-Patentanmeldung mit dem Aktenzeichen 22190105.1 bezieht sich auf ein Verfahren zur Herstellung von einem oder mehreren Alkoxysiloxanen durch thermische Umsetzung von mindestens einem Abfallsilikon mit mindestens einem Alkalimetallalkoholat und mindestens einem Alkohol, wobei man
(a) in einem ersten Schritt das mindestens eine Abfallsilikon unter Durchmischung mit mindestens einem Alkohol und mindestens einem Alkalimetallalkoholat unter Wärmeeintrag umsetzt, und zwar ohne Entfernung von etwaig auftretendem Wasser aus der Reaktionsmischung, und
(b) das aus dieser Reaktion hervorgehende Reaktionsgemisch in einem zweiten Schritt mit Hilfe von mindestens einer Brönstedtsäure gegebenenfalls unter Hinzufügen von mindestens einem Solvens neutralisiert, die festen Bestandteile abtrennt, insbesondere abfiltriert, und
(c) danach das oder die Alkoxysiloxane durch thermisches Abtrennen flüchtiger Verbindungen isoliert.

Überraschenderweise wurde nun gefunden, dass man Abfallsilikone in hohen Ausbeuten in Anlehnung an die technische Lehre der eben genannten noch nicht offengelegten EP-Patentanmeldung mit dem Aktenzeichen 22190105.1 auch zu Siloxanzyklen depolymerisieren kann.

Der Gegenstand der Erfindung ist ein Verfahren zur Depolymerisation von Abfallsilikonen zu Siloxanzyklen, wobei man
(a) in einem ersten Schritt mindestens ein Abfallsilikon unter Durchmischung mit mindestens einem Alkohol und mindestens einem Alkalimetallalkoholat unter Wärmeeintrag umsetzt, und zwar ohne Entfernung von etwaig auftretendem Wasser aus der Reaktionsmischung, insbesondere ohne den Einsatz inerter, wasserunlöslicher aber mit Wasser Azeotrope bildenden Solventien und/oder ohne den Einsatz weiterer, wasserentziehender Mittel, und
(b) danach das aus dieser Reaktion hervorgehende Reaktionsgemisch in einem zweiten Schritt mit Hilfe von mindestens einer Brönstedtsäure gegebenenfalls unter Hinzufügen von mindestens einem Solvens neutralisiert, die festen Bestandteile abtrennt, insbesondere abfiltriert, und dann das gegebenenfalls zuvor hinzugefügte Solvens sowie den aus dem Schritt (a) stammenden, überschüssigen Alkohol von dem oder den erhaltenen Alkoxysiloxanen abdestilliert und,
(c) danach in einem dritten Schritt das oder die so erhaltenen Alkoxysiloxane mit mindestens einem Fettalkohol und mindestens einem Alkalimetallalkoholat unter Durchmischung erwärmt und, vorzugsweise unter Anlegen eines Hilfsvakuums, die dabei gebildeten Siloxanzyklen thermisch abtrennt, vorzugsweise destillativ abtrennt.

Unter "inerte Solventien" im ersten Schritt (a) sollen alle Lösungsmittel verstanden werden, die sich im ersten Schritt (a) chemisch inert verhalten, das heißt, nicht an der Reaktion selbst teilnehmen. Beispiele inerter, wasserunlöslicher aber mit Wasser Azeotrope bildender Solventien sind demgemäß Benzol und Toluol.

Unter Wärmeeintrag im erfindungsgemäßen ersten Schritt (a) ist das gezielte Erwärmen der aus mindestens einem Abfallsilikon mit mindestens einem Alkohol und mindestens einem Alkalimetallalkoholat bestehenden Reaktionsmischung zu verstehen. Das Erwärmen kann auf bekannte Weise erfolgen. Z.B. kann dabei der Wärmeeintrag bevorzugt über die Mantelflächen eines dabei verwendeten Reaktionsbehälters oder Reaktors und dabei wahlweise unter Verwendung eines geeigneten Wärmeüberträgermediums, wie zum Beispiel Heißdampf, Wasser oder Öl oder auch zum Beispiel durch Elektrobeheizung erfolgen. Ebenfalls ist es erfindungsgemäß z.B. möglich, bei Einsatz stark rührender Maschinen die Autogenerwärmung auszunutzen, die sich aus der durch die von der Maschine geleisteten mechanischen Arbeit (Reibungswärme) in der mehr oder minder viskosen Reaktionsmischung erklärt. Zu den prinzipiellen Ausgestaltungsmöglichkeiten des Erwärmens sei auf Wilhelm R.A. Vauck/Hermann A. Müller, Grundoperationen chemischer Verfahrenstechnik, 8. Auflage, Weinheim, New York, VCH Verlagsgesellschaft mbH, 1990, Seiten 421 - 471 verwiesen.

Mit Hilfsvakuum ist im Sinn dieser Erfindung vorzugsweise ein Druckbereich kleiner als 300 hPa, insbesondere ein Druckbereich von 0,001 hPa bis 250 hPa gemeint.

Der erfindungsgemäße erste Schritt (a) sieht vor, dass man mindestens ein Abfallsilikon unter Durchmischung mit mindestens einem Alkohol und mindestens einem Alkalimetallalkoholat unter Wärmeeintrag umsetzt, und zwar ohne Entfernung von etwaig auftretendem Wasser aus der Reaktionsmischung, insbesondere ohne den Einsatz inerter, wasserunlöslicher aber mit Wasser Azeotrope bildenden Solventien und/oder ohne den Einsatz weiterer, wasserentziehender Mittel.

Der erfindungsgemäße erste Schritt (a) kann insbesondere in Abhängigkeit vom Trocknungszustand des eingesetzten Alkohols, der z.B. von einer technischen Qualität bis hin zu einem absolutierten Solvens reichen kann, und der stark hygroskopischen Alkalimetallalkoholate neben Alkoxysiloxanen ggf. auch noch Anteile an Hydroxygruppen tragenden Siloxanen (siehe erfindungsgemäßes Beispiel 1 mit Ethanol) hervorbringen. Deren mögliches Vorliegen neben dem Alkoxysiloxan ist jedoch für die erfolgreiche Durchführung des erfindungsgemäßen Verfahrens und insbesondere für das Durchlaufen der Schritte (b) und (c) unerheblich.

Wenn die Umsetzung in dem ersten Schritt (a) des erfindungsgemäßen Verfahrens ohne die Verwendung wasserbindender Kieselsäureester, insbesondere ohne Einsatz von Tetraalkoxysilanen, vorgenommen wird, so entspricht dies einer besonders bevorzugten Ausführungsform der Erfindung.

Der erfindungsgemäße zweite Schritt (b) sieht vor, dass man das aus dem ersten Schritt (a) hervorgehende Reaktionsgemisch mit Hilfe von mindestens einer Brönstedtsäure gegebenenfalls unter Hinzufügen von mindestens einem Solvens neutralisiert, die festen Bestandteile abtrennt, insbesondere abfiltriert, und dann das gegebenenfalls zuvor hinzugefügte Solvens sowie den aus dem ersten Schritt (a) stammenden, überschüssigen Alkohol von dem oder den erhaltenen Alkoxysiloxanen abdestilliert.

Der erfindungsgemäße dritte Schritt (c) sieht vor, dass man das oder die aus dem zweiten Schritt (b) erhaltenen Alkoxysiloxane mit mindestens einem Fettalkohol und mindestens einem Alkalimetallalkoholat unter Durchmischung erwärmt und die dabei gebildeten Siloxanzyklen thermisch abtrennt, vorzugsweise destillativ abtrennt, insbesondere unter Anlegen eines Hilfsvakuums.

Das erfindungsgemäße Verfahren kann gemäß einer besonders bevorzugten Ausführungsform der Erfindung im dritten Schritt (c) semikontinuierlich durchgeführt werden, indem man dem an Alkoxysiloxan und an Siloxanzyklen verarmenden oder verarmten, noch Fettalkohol und Alkalimetallalkoholat enthaltenden Destillationssumpf eine frische Menge an Alkoxysiloxan kontinuierlich oder portionsweise diskontinuierlich hinzufügt und die Bildung von Siloxanzyklen auf diese Weise erneut startet oder fortführt.

Die thermische, vorzugsweise destillative Abtrennung der aus dem dritten Schritt (c) hervorgehenden flüchtigen Verbindungen liefert ein Siloxanzyklen enthaltendes Destillat, vorzugsweise ein die Siloxanzyklen Octamethylcyclotetrasiloxan (D₄) und Decamethylcyclopentasiloxan (D₅) umfassendes, insbesondere daraus bestehendes, Destillat.

Bei Verwendung der besonders bevorzugten Alkohole Methanol und/ oder Ethanol im ersten Schritt (a) des erfindungsgemäßen Verfahrens kann man des Weiteren im dritten Schritt (c) vorzugsweise eine Alkoxy-Si-Körper enthaltende Leichtsiederfraktion auffangen, die analytisch belegt, neben mitgeschleppten Anteilen an Siloxanzyklen im Wesentlichen aus Dialkoxydimethylsilan sowie aus Dialkoxytetramethyldisiloxan besteht.

Alkoxy-Si-Körper sind im Sinne der vorliegenden Erfindung diejenigen Silizium enthaltenden Silane beziehungsweise Siloxane, die pro Molekül zwei Alkoxy-Si-Bindungen aufweisen und aufgrund ihrer Flüchtigkeit aus dem erfindungsgemäßen dritten Schritt (c) thermisch, vorzugsweise destillativ, abgetrennt werden können.

"Leichtsiederfraktion" bedeutet im Sinne der vorliegenden Erfindung diejenige Stofflichkeit, die man aufgrund ihrer erhöhten Flüchtigkeit noch vor dem thermischen Abtrennen der Hauptmenge an Siloxanzyklen im dritten Schritt (c) durch thermische Abtrennung gewinnen kann. Vorzugsweise umfasst sie, insbesondere besteht sie, aus den Alkoxy-Si-Körpern Dialkoxydimethylsilan sowie aus Dialkoxytetramethyldisiloxan neben mitgeschleppten Anteilen an Siloxanzyklen.

"Flüchtig" bedeutet im Sinne dieser Erfindung insbesondere, dass diese Stoffe wegen ihres niedrigen Siedepunktes bzw. hohen Dampfdrucks schnell verdampfen (verflüchtigen). Gemäß Definition der Weltgesundheitsorganisation (WHO) sind z.B. VOC (volatile organic compounds) organische Substanzen mit einem Siedebereich von 60° bis 250° C. Zitat entnommen aus "Flüchtige organische Verbindung", https//wissenwiki.de.

Nur zur Veranschaulichung der relativen Flüchtigkeiten der im dritten Schritt (c) des erfindungsgemäßen Verfahrens vorzugsweise involvierten Stoffe gedacht, seien hier die in W. Noll, Chemie und Technologie der Silicone, Verlag Chemie, Weinheim (1960) auf den Seiten 62, 168 und 180 referierten Siedepunkte herangezogen.

Z.B. bei Einsatz des im erfindungsgemäßen ersten Schritt (a) besonders bevorzugten Ethanols gewärtigt man folgende Situation:

| | |
|---|---|
| (CH₃)₂Si(OC₂H₅)₂ | 114°C Siedepunkt bei 742 Torr (entsprechend 989,251 hPa) |
| C₂H₅O[(CH₃)₂SiO]₂C₂H₅ | 161°C Siedepunkt bei 760 Torr (entsprechend 1013,249 hPa) |
| [(CH₃)₂SiO]₃ | 134°CSiedepunkt bei 760 Torr (entsprechend 1013,249 hPa) |
| [(CH₃)₂SiO]₄ | 175°C Siedepunkt bei 760 Torr (entsprechend 1013,249 hPa) |
| [(CH₃)₂SiO]₅ | 210°C Siedepunkt bei 760 Torr (entsprechend 1013,249 hPa) |
| [(CH₃)₂SiO]₆ | 245°C Siedepunkt bei 760 Torr (entsprechend 1013,249 hPa) |

Die im dritten Schritt (c) optional abtrennbare, vorzugsweise abgetrennte, Alkoxy-Si-Körper enthaltende Leichtsiederfraktion kann vorzugsweise dem neuerlich anzufahrenden oder fortzuführenden, ersten Schritt (a), das heißt, der Depolymerisation gewünschtenfalls zugeführt werden. Sie vermag es, als Alkoxygruppen liefernde Stofflichkeit gewünschtenfalls Anteile des anderweitig hinzuzufügenden, frischen Alkohols zu ersetzen. Dies entspricht einer besonders bevorzugten Ausführungsformen der Erfindung.

Es entspricht somit ebenfalls einer besonders bevorzugten Ausführungsform der Erfindung, wenn aus dem zweiten Schritt (b) stammender, überschüssiger Alkohol und/oder die im dritten Schritt (c) optional abgetrennte Alkoxy-Si-Körper enthaltende Leichtsiederfraktion als Reagenzien in den Depolymerisationsschritt (a) zurückgeführt werden.

Solches Vorgehen sowie ein oben beschriebener, semikontinuierlich gestalteter Zyklisierungsprozessschritt (c) selbst sind sehr vorteilhaft für einen unter dem Aspekt der Stoffökonomie besonders bevorzugten Recyclingprozess für Abfallsilikone im Sinne einer bevorzugten Ausführungsform der Erfindung.

Es entspricht einer bevorzugten Ausführungsform der Erfindung, wenn das mindestens eine Abfallsilikon vor der Umsetzung, d.h. vor Durchführung des ersten Schrittes (a) mechanisch zerkleinert wird.

Der Begriff des Abfallsilikons (oder synonym: "End-of-Life-Silikon") umfasst im Rahmen der erfindungsgemäßen Lehre alle silikonbasierten oder Silikon-enthaltenden Produkte sowie Produkte mit Silikonanhaftungen bzw. Silikonverunreinigungen, die jeweils ihre technische Lebensdauer oder Haltbarkeit nahezu und/oder bereits vollständig erreicht haben oder aber aus einem anderen Grunde für die Entsorgung vorgesehen wären. Die Haltbarkeit oder Lebensdauer bezeichnet dabei die Zeit, die ein Material oder ein Gegenstand ohne den Austausch von Kernkomponenten oder komplettes Versagen genutzt werden kann. Hierzu zählen im Rahmen der Lehre auch diejenigen Silikon-Kleb- und Silikon-Dichtstoffe zum Beispiel in Kartuschen, deren Haltbarkeits- oder Verfalldatum beinahe erreicht und/ oder überschritten ist (bewertet nach dem zu erwartenden und/ oder bereits eingetretenen Stadium der Aushärtung), sowie zum Beispiel auch mehr oder minder alte Anguss- und/ oder Stanzabfälle aus der Silikonkautschuk-Produktion oder ebenfalls auch ausrangierter Elektronikschrott, der silikonversiegelte Bauteile/ Bauteilgruppen enthält. Der Begriff Abfallsilikon umfasst im Rahmen der erfindungsgemäßen Lehre außerdem alle Silikonabfälle, auch Produktionsabfälle. Er umfasst insbesondere all jene Silikone oder silikonhaltigen Teile oder Teile mit Silikonanhaftungen oder Silikonanschmutzungen, die ansonsten für die gewöhnliche Entsorgung vorgesehen sind und demgemäß als Abfall betrachtet werden. Er umfasst somit z.B. auch für die Entsorgung vorgesehene Silikon-Kleb- und/oder -Dichtstoff-Kartuschen, insbesondere gebrauchte Silikon-Kleb- und/oder - Dichtstoff-Kartuschen, in und an welchen noch Silikonreste kleben oder vorhanden sind. Die Begriffe der "Abfallsilikone", "Silikonabfälle" und der "End-of-Life-Silikone" werden im Sinne dieser Erfindung synonym verstanden.

Insbesondere werden im Rahmen dieser Erfindung unter Abfallsilikon entsprechende Silikonkautschuke und/oder Silikonöle verstanden.

Wenn das mindestens eine Abfallsilikon, insbesondere entsprechende Abfall-Silikonöle, aus D- und M-Einheiten zusammengesetzt sind, so liegt eine weitere bevorzugte Ausführungsform der Erfindung vor. Unter Alkalimetallalkoholat werden im Rahmen dieser Erfindung vorzugsweise Verbindungen der allgemeinen Formel:

[M⁺][OR⁻]

verstanden, wobei
- M: ausgewählt ist aus der Reihe der Alkalimetalle Li, Na oder K, bevorzugt Na oder K, und
- R: einen linearen, verzweigten oder zyklischen Alkylrest, bevorzugt mit 1 bis 10 Kohlenstoffatomen, besonders bevorzugt mit 1 bis 6 Kohlenstoffatomen, ganz besonders bevorzugt mit 1 oder 2 Kohlenstoffatomen darstellt.

Erfindungsgemäß wird mindestens ein Alkalimetallalkoholat eingesetzt. Es können also ein oder mehrere Alkalimetallalkoholate eingesetzt werden. Am meisten bevorzugt ist der Einsatz von Kaliumethanolat, Natriumethanolat, Kaliummethanolat und/oder Natriummethanolat.

Zu den bekannten Verfahren der Herstellung von Alkoholaten gehört die Chloralkali-Elektrolyse nach dem Amalgam-Verfahren, bei der Natriumamalgam mit Alkohol umgesetzt wird [vgl. z. B. Chemical and Engineering News 22, 1903-06 (1944)].

Eine weitere bekannte Methode ist die Herstellung von Alkoholaten aus einem Alkalimetall und einem Alkohol bzw. aus einem Alkalihydroxid und einem Alkohol. Die Alkoholatproduktion aus einem Alkalimetall und einem tertiären Alkohol ist z. B. aus DE-23 33 634 (Dynamit Nobel) oder DE 26 12 642 (Degussa) bekannt. Die Herstellung eines Alkoholats aus einem Alkalihydroxid und einem tertiären Alkohol ist ebenfalls bekannt. Die erste Verfahrensvariante erfordert den Einsatz von teurem Alkalimetall, und bei der zweiten Variante ausgehend vom Alkalihydroxid muss das bei der Umsetzung entstehende Wasser destillativ entfernt werden, was den entsprechenden hohen thermischen Aufwand erfordert.

Gemäß der Lehre der DE-A-33 46 131 können Alkalialkoholate elektrolytisch aus Salzen hergestellt werden, wobei eine Elektrolysezelle, bei der eine Kationenaustauschmembran die Elektrodenräume trennt, eingesetzt wird. In DE-42 33 191.9-43 wird ein Verfahren beschrieben, dass die Herstellung eines Alkalialkoholats aus einem Salz durch Elektrodialyse ermöglicht.

Ebenfalls sind Verfahren zur Herstellung von Sonderalkoholaten, wie zum Beispiel den Alkoholaten höherer und/oder mehrwertiger Alkohole vereinzelt beschrieben. Alkoholate höherer und/oder mehrwertiger Alkohole lassen sich bekanntlich grundsätzlich durch Umalkoholisieren, d. h., durch Substitution des Alkoholatrestes niederer Alkoholate ROM durch Umsetzung mit höheren Alkoholen R'OH (wobei R und R' Alkylreste unterschiedlicher Kohlenstoffkettenlänge sind und M ein Metallkation bezeichnet) in einem flüssigen Reaktionsgemisch bei geeigneten Temperatur - und Druckverhältnissen herstellen. Diese den Alkoholatrest substituierende Umsetzung wird im Laborjargon auch als "Umkochen" bezeichnet. Die Lage des Gleichgewichts ROM + R'OH ⇔ ROH + R'OM hängt von der Acidität der beiden Alkohole ab, die in der Reihenfolge Methanol > primäre > sekundäre > tertiäre Alkohole abnimmt [R. T. Mclver und J. A. Scott, J. American Chem. Soc. 96 (1973) 2706]. Daher soll die Herstellung der Alkoholate sekundärer Alkohole auf diesem Wege nur in Ausnahmefällen möglich sein und die Herstellung der Alkoholate tertiärer Alkohole durch Umalkoholisierung gar nicht gelingen ["Methoden der Organischen Chemie" (1963) Bd. 6/2, S. 13]. Jedoch wurde die Herstellung von Alkoholaten durch Umkochen in DE-1 254 612 und in DE-27 26 491 (beide von Dynamit Nobel) auch für höhere Alkohole beschrieben. GB-1 143 897 (Metallgesellschaft) beschreibt die Umsetzung eines einwertigen Alkalialkoholats mit einem bis zu sechs Hydroxylgruppen enthaltenden C₂- bis C₁₈-Alkohol oder -Phenol, wobei als Lösungsmittel ein Überschuss an einwertigem Alkohol und/oder ein Kohlenwasserstoff eingesetzt wird. Das Umkochen führt aber immer zur Bildung des leichtsiedenden Alkohols ROH (z. B. Methanol), der zur Isolierung des gewünschten Alkoholats - gegebenenfalls zusätzlich zum nicht umgesetzten höheren Alkohol R'OH - aus dem Reaktionsproduktgemisch zum Teil mit erheblichem thermischen Aufwand abgetrennt werden muss.

Abseits dieser thermisch geführten Gleichgewichtsverschiebungen lehrt die EP 0776995 B1 ein Verfahren zur Herstellung von Alkoholaten unter dem Einfluss eines elektrischen Feldes, wobei ein Alkohol durch Zufuhr von Metallionen in das gewünschte Alkoholat umgesetzt wird und die Metallionen selbst aus der elektrochemischen Zerlegung eines anderen Alkoholates in dem elektrischen Feld stammen. Die Alkoholatbildung und die -zerlegung erfolgen in räumlich durch Ionenaustauschmembranen getrennten Kammern.

Das im ersten Schritt (a) des erfindungsgemäßen Verfahrens eingesetzte mindestens eine Alkalimetallalkoholat wird dort vorzugsweise in Gesamt-Mengen von 1 bis 20 Massen-%, bevorzugt 5 bis 19 Massen-%, besonders bevorzugt 6 bis 18 Massen-% bezogen auf die Gesamt-Masse des bei der Umsetzung verwendeten Abfallsilikons eingesetzt. Dies entspricht einer bevorzugten Ausführungsform der Erfindung.

Das erfindungsgemäße Verfahren wird in dem ersten Schritt (a) vorzugsweise im Temperaturbereich von 50°C bis 200°C, bevorzugt im Temperaturbereich von 60°C bis 180°C, insbesondere zwischen 78°C und 170°C, und über einen Zeitraum von vorzugsweise 0,5 bis 12 Stunden, bevorzugt über einen Zeitraum von 1 bis 8 Stunden und das jeweils bevorzugt lösemittelfrei durchgeführt. Dies entspricht einer besonders bevorzugten Ausführungsform der Erfindung.

Das erfindungsgemäße Verfahren kann in dem ersten Schritt (a) vorzugsweise bei einem Druck größer 1.013,25 hPa und kleiner 12000 hPa, d.h. bei Überdruck, durchgeführt werden. Ebenso kann es vorzugsweise auch bei normalem Umgebungsdruck durchgeführt werden.

Gemäß einer bevorzugten Ausführungsform der Erfindung ist der im erfindungsgemäßen Verfahren im ersten Schritt (a) eingesetzte mindestens eine Alkohol ausgewählt aus der Gruppe bestehend aus linearen, verzweigten und zyklischen C₁ bis C₁₀- Alkanolen. Es können ein oder mehrere Alkohole, also auch Mischungen von Alkoholen eingesetzt werden, vorzugsweise können Methanol, Ethanol, 1- Propanol, Isopropanol, 1-Butanol, 2-Butanol, iso-Butanol, Pentanole, Hexanole, Heptanole, Octanole, Nonanole und/oder Dekanole, und/oder deren Isomere, eingesetzt werden, besonders bevorzugt sind Methanol und/oder Ethanol, ganz besonders bevorzugt ist Ethanol.

Das erfindungsgemäße Verfahren sieht im ersten Schritt (a) unter anderem vor, dass die Umsetzung ohne Entfernung von etwaig auftretendem Wasser aus der Reaktionsmischung, insbesondere ohne den Einsatz inerter, wasserunlöslicher aber mit Wasser Azeotrope bildenden Solventien und/oder ohne den Einsatz weiterer, wasserentziehender Mittel erfolgt.

Der im ersten Schritt (a) verwendete Alkohol wird im Sinne dieses ersten Schritts (a) nicht als Solvens betrachtet. D.h. der mindestens eine Alkohol, vorzugsweise ausgewählt aus der Gruppe bestehend aus linearen, verzweigten und zyklischen C₁ bis C₁₀- Alkanolen, insbesondere Methanol, Ethanol, 1- Propanol, Isopropanol, 1-Butanol, 2-Butanol, iso-Butanol, Pentanole, Hexanole, Heptanole, Octanole, Nonanole und/oder Dekanole, und/oder deren Isomere, besonders bevorzugt Methanol und/oder Ethanol, ganz besonders bevorzugt Ethanol, ist bzw. sind keine Solventien im Sinne des ersten Schrittes (a) von Anspruch 1.

Gemäß einer bevorzugten Ausführungsform der Erfindung wird der im ersten Schritt (a) eingesetzte mindestens eine Alkohol in Gesamt-Mengen von 10 bis 200 Massen-%, bevorzugt 20 bis 100 Massen-%, besonders bevorzugt in Mengen 30 bis 80 Massen-% bezogen auf die Gesamt-Masse des bei der Umsetzung insgesamt verwendeten Abfallsilikons eingesetzt.

Die Gewährleistung einer guten Rührfähigkeit und Durchmischbarkeit im ersten Schritt (a) des erfindungsgemäßen Verfahrens kann die Leichtigkeit, mit der der Auflösungsprozess stattfindet, vorzugsweise positiv beeinflussen. Unter diesem Gesichtspunkt kann es zur Vermeidung hoher Scher- und Rührleistungen bevorzugt sein, insbesondere bei der Verwendung fester Abfallsilikone mit einem hohen Polymerisationsgrad und eventueller Quervernetzung den ersten Schritt a) des erfindungsgemäßen Verfahrens z.B. sequenziert zu gestalten, das heißt, zunächst eine Portion gegebenenfalls zuvor zerkleinerten Abfallsilikons mit Alkalimetallalkoholat(en) und Alkohol(en) unter Wärmeeintrag umzusetzen und danach die Konsistenz der Reaktionsmatrix im Hinblick auf deren Rührfähigkeit und Durchmischbarkeit zu bewerten. Erweist sich diese Reaktionsmatrix als gut rührbar, so kann man eine weitere Portion des Abfallsilikons hinzufügen und den Prozess erfindungsgemäß fortsetzen. Dieses Vorgehen kann man so lange fortsetzen, bis die Reaktionsmatrix die gewünschte Zielrheologie aufweist. Dies entspricht einer bevorzugten Ausführungsform der Erfindung.

Im Rahmen einer weiteren bevorzugten Ausführungsform und für die erzielbare Ausbeute bei der Umsetzung des Abfallsilikons mit mindestens einem Alkohol und mindestens einem Alkalimetallalkoholat vorteilhaft, kann die erfindungsgemäße Umsetzung auch unter Überdruckbedingungen in einem druckfesten Reaktor durchgeführt werden. Der dabei verzeichnete Druckaufbau ist vorzugsweise autogener Natur und geht auf den Dampfdruck der darin involvierten Systemkomponenten zurück. Falls gewünscht, kann der Reaktor zudem vorzugsweise noch mit einem Inertgaspolster beaufschlagt werden.

Für die Anwendung des erfindungsgemäßen Verfahrens im technischen Maßstab kann es empfehlenswert und folglich bevorzugt sein, das jeweilige Abfallsilikon zuvor mit Hilfe einiger orientierender Vorversuche im Labormaßstab zu bewerten, um so die jeweils optimalen Verfahrensparameter zu ermitteln.

Dabei beeinflussen für den Fachmann verständlich unter anderem der Polymerisationsgrad, der Grad an Quervernetzung sowie, falls vorhanden, die Art und Menge des im jeweiligen Abfallsilikon ggf. verarbeiteten Füllstoffs dessen Verhalten in der erfindungsgemäßen Umsetzung. Unter den Abfallsilikonen stellen insbesondere peroxidisch-nachvernetzte und zudem noch getemperte Silikonkautschuke stets eine besondere technische Herausforderung für das chemische Recycling dar. Die Temperung von Silikonkautschukteilen verbessert deren Dimensionsstabilität und verhindert das Ausschwitzen von Weichmachern insbesondere während der Anwendung unter großer Hitze.

Erfindungsgemäß wird die aus dem ersten Schritt (a) des erfindungsgemäßen Verfahrens hervorgehende Reaktionsmischung im Rahmen eines zweiten Schritts (b) durch Hinzufügen von mindestens einer Brönstedtsäure, gegebenenfalls unter Hinzufügen von mindestens einem Solvens, neutralisiert. Es können eine oder mehrere Brönstedtsäuren eingesetzt werden. Dabei können vorzugsweise wasserfreie Mineralsäuren (wie vorzugsweise wasserfreie Schwefelsäure und/oder wasserfreie Perchlorsäure) und/oder wasserfreie organische Säuren (wie vorzugsweise wasserfreie Essigsäure) zur Neutralisation eingesetzt werden. Insbesondere werden wasserfreie Schwefelsäure, wasserfreie Perchlorsäure und/oder wasserfreie Essigsäure eingesetzt.

Im Falle der Verwendung von wasserfreier Mineralsäure(n) bemisst man deren Zugabemenge vorzugsweise so, dass stöchiometrische Äquivalenz bezogen auf das insgesamt eingesetzte Alkalimetallalkoholat erzielt wird. Bei Verwendung der deutlich schwächeren, wasserfreier organischen Säure(n) (wie z.B. wasserfreier Essigsäure) wählt man vorzugsweise einen deutlichen stöchiometrischen Überschuss an Säure bezogen auf insgesamt eingesetztes Alkalimetallalkoholat. Dieser wird vorzugsweise bis zum 50%igen stöchiometrischen Überschuss bemessen.

Die Einsatzmenge der insgesamt eingesetzten Brönstedtsäure wird vorzugsweise also so gewählt, dass sie von der stöchiometrischen Äquivalenz bis zum 50%igen stöchiometrischen Überschuss reicht, jeweils bezogen auf insgesamt eingesetztes Alkalimetallalkoholat.

Insbesondere dann, wenn die aus dem erfindungsgemäßen Neutralisationsschritt absehbare Salzmenge einer leichten Filtration im Wege steht, kann vorzugsweise der Einsatz von mindestens einem Solvens vorgesehen werden. Es können optional ein oder mehrere Solventien eingesetzt werden.

Als ein oder mehrere Solventien eignen sich erfindungsgemäß im Rahmen des zweiten Schrittes (b) bevorzugt solche, die selbst mit Blick auf das Reaktionssystem chemisch inert sind und die Verdünnung bzw. Dispersion der Bestandteile der Neutralisationsstufe fördern. Bevorzugt ist das mindestens eine Solvens ausgewählt aus der Gruppe bestehend aus Alkanen, Alkylaromaten, Alkoholen, Hexamethylcyclotrisiloxan (D₃), Octamethylcyclotetrasiloxan (D₄), Dekamethylcyclopentasiloxan (D₅) und Dodekamethylcyclohexasiloxan (D₆).

Besonders bevorzugt ist der Einsatz von Alkylaromaten, wie vorzugsweise Toluol und/oder Xylole. Ebenfalls bevorzugt einsetzbar sind Siloxane ausgewählt aus der Gruppe bestehend aus Hexamethylcyclotrisiloxan (D₃), Octamethylcyclotetrasiloxan (D₄), Dekamethylcyclopentasiloxan (D₅) und Dodekamethylcyclohexasiloxan (D₅) sowie deren Mischungen.

Dann können die aus der Neutralisation hervorgehenden festen Bestandteile im Rahmen des zweiten Schrittes (b) vorzugsweise abgetrennt, insbesondere abfiltriert werden. Dann werden, insbesondere nach Abfiltrieren der aus der Neutralisation hervorgehenden festen Bestandteile, die flüchtigen Verbindungen im Rahmen des zweiten Schrittes (b) destillativ abgetrennt und das gegebenenfalls auch Anteile hydroxyfunktionellen Polydimethylsiloxans enthaltende Alkoxysiloxan isoliert.

Im dritten Schritt (c) des erfindungsgemäßen Verfahrens wird bevorzugt mindestens ein Fettalkohol, vorzugsweise mit einer Kohlenstoffanzahl von C₁₂ bis C₁₈, bevorzugt mit einer Kohlenstoffanzahl von C₁₄ bis C₁₈, insbesondere mit einer Kohlenstoffanzahl von C₁₆ (vorzugsweise Stearylalkohol = Hexadecanol) eingesetzt. Der Einsatz von Stearylalkohol ist ganz besonders bevorzugt. Ebenfalls ist es besonders bevorzugt, Mischungen aus zwei oder mehreren geeigneten Fettalkoholen einzusetzen.

Vorzugsweise wird der mindestens eine, im dritten Schritt (c) verwendete Fettalkohol in Mengen von 20 bis 50 Gewichtsprozent, bevorzugt in Mengen von 25 bis 35 Gewichtsprozent bezogen auf die vorliegende Gesamtmenge an Alkoxysiloxan eingesetzt.

Vorzugsweise beträgt die im dritten Schritt (c) verwendete Menge Alkalimetallalkoholat 10 bis 20 Gewichtsprozent, bevorzugt 12 bis 18 Gewichtsprozent bezogen auf die Gesamt-Menge des mindestens einen im dritten Schritt (c) verwendeten Fettalkohols.

Das erfindungsgemäße Verfahren wird in dem dritten Schritt (c) vorzugsweise im Temperaturbereich von 100°C bis 200°C, bevorzugt im Temperaturbereich von 120°C bis 160°C und über einen Zeitraum von vorzugsweise 1 bis 12 Stunden, bevorzugt über einen Zeitraum von 2 bis 8 Stunden und das jeweils vorzugsweise unter Anlegen eines Hilfsvakuums, vorzugsweise mit einem Druckbereich kleiner als 300 hPa, insbesondere mit einem Druckbereich von 0,001 hPa bis 250 hPa durchgeführt. Dies entspricht einer bevorzugten Ausführungsform der Erfindung.

Die aus dem erfindungsgemäßen dritten Schritt (c) hervorgehenden Siloxanzyklen eignen sich, insbesondere in gegebenenfalls destillativ nachgereinigter Form, als Basismaterialien zur Erzeugung einer Vielzahl organomodifizierter Siloxane gemäß allen dem Fachmann vertrauten Verarbeitungswegen.

### Beispiele:

Die folgenden Beispiele dienen dem Fachmann allein zur Erläuterung dieser Erfindung und stellen keinerlei Beschränkung des erfindungsgemäßen Gegenstandes dar. Die ²⁹Si-NMR-Spektroskopie diente in allen Beispielen der Reaktionsverfolgung.

Die ²⁹Si-NMR-Proben wurden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard[d(²⁹Si) = 0,0 ppm] gemessen.

Soweit nicht anders gesagt, sind alle Prozentangaben als Angaben in Gewichtsprozenten zu verstehen.

### Beispiel 1 (erfindungsgemäß)

In einem 1000-ml-Vierhalsrundkolben mit KPG-Rührer, Innenthermometer und aufgesetztem Rückflußkühler wurden 300 g eines gemischten Silikonkautschukabfalls bestehend aus 150 g eines kleinstückigen, quervernetzten Silikonextruderabfalls (Teilchendurchmesser ca. 6 mm) und aus 150 g eines auf vergleichbare Stückigkeit zerkleinerten, an Luft zuvor auf Polyethylenfolie ausgehärteten Bad- und Sanitärsilikons (Firma Conel GmbH, Manhattan grau) zusammen mit 300 g Ethanol und 50 g Natriumethanolat (NaOC₂H₅) unter Rühren zügig auf 80°C erwärmt, wobei sich leichtes Rückflusssieden einstellte.

Nach etwa 1 Stunde Reaktionszeit hatten sich die Silikonstücke aufgelöst und es war eine homogene, gelb-bräunliche Suspension entstanden. Man ließ den Ansatz auf ca. 40°C abkühlen und fügte unter weiterem Rühren 66,3 g wasserfreie Essigsäure hinzu (50% Säureüberschuss bezogen auf eingesetztes Alkoholat). Man ließ noch etwa 30 Minuten nachrühren und filtrierte die festen Bestandteile mittels einer Filterpresse über eine Seitz K300 Filterscheibe ab.

Das gewonnene Filtrat wurde am Rotationsverdampfer bei 70°C und einem angelegten Hilfsvakuum von < 5 mbar von Ethanol befreit. Mit dem Einengen des Filtrats ging eine leichte Salzausfällung einher, die man durch Filtration über einen Faltenfilter (MN 606 1/4) beseitigte.

Das gelblich-bräunliche Filtrat bestand gemäß ²⁹Si-NMR-Spektroskopie aus einem α,ω-Diethoxy-polydimethylsiloxan der mittleren Kettenlänge von N = 20,8 mit kleineren Anteilen eines hydroxyfunktionellem Polydimethylsiloxans.

Eine 30-g-Teilmenge besagten Filtrats wurde gemeinsam mit 15 g Stearylalkohol (Hexadecanol) und 2,5 g Kaliummethanolat für eine Stunde bei 130°C Sumpftemperatur am Rotationsverdampfer bei Normaldruck (1.013,25 hPa) erhitzt, wobei keinerlei Destillatanfall beobachtet wurde.

Dann wurde die Sumpftemperatur auf 140°C erhöht und ein Hilfsvakuum von <5 mbar angelegt. Innerhalb der nächsten 2 Stunden ging die Hauptmenge an Destillat über und nach insgesamt 4 Stunden isolierte man 18,1 eines farblosen, klaren Destillats entsprechend 60,3% der eingesetzten Alkoxysiloxanmenge, dem die begleitende GC-Analytik eine Zusammensetzung von 0,54% D₃, 83,9% D₄, 11,0% D₅, und 1,8% D₆ bei vollkommener Ethanolfreiheit < 0,01%) (Summe 97,2%) zuschrieb. In einer nachgeschalteten Kühlfalle wurden zudem 3,2 g einer farblosen, klaren Flüssigkeit aufgefangen. Diese Alkoxy-Si-Körper enthaltende Leichtsiederfraktion entsprach in ihrer Menge 10,7% der eingesetzten Alkoxysiloxanmenge und besaß gemäß begleitender GC-Analytik eine Zusammensetzung von 2,4 % D₃, 52,0 % D₄, 0,29 % D₅, und < 0,02 % D₆ sowie 1,8% Ethanol (Summe der Siloxanzyklen = 54,7%) zu. Die restlichen Bestandteile bestanden gemäß ²⁹Si-NMR-Spektroskopie aus Diethoxydimethylsilan und Diethoxytetramethyldisiloxan.

Im Sinne der erfindungsgemäß besonders bevorzugten semikontinuierlichen Fahrweise wurde der Sumpfkolben des Rotationsverdampfers sodann nochmals mit einer 30-g-Teilmenge des Filtrats beschickt und das zuvor beschriebene Prozedere wurde wiederholt, wobei man jedoch von Anfang an eine Sumpftemperatur von 140°C wählte.

Man isolierte 26,2g eines farblosen, klaren Destillats (entsprechend 87,3% der eingesetzten Alkoxysiloxanmenge). Die begleitende GC-Analytik schrieb diesem Destillat eine Zusammensetzung von 0,6 % D₃, 82,5 % D₄, 12,1 % D₅, und 2,0 % D₆ sowie < 0,01 % Ethanol (Summe der Siloxanzyklen 97,2 %) zu. Der Inhalt der nachgeschalteten Kühlfalle bestand ebenfalls aus einer farblos, klaren Flüssigkeit und wog 3,0 g (entsprechend 10,0% der eingesetzten Alkoxysilanmenge). Die begleitende GC-Analytik schrieb dem Kühlfalleninhalt eine Zusammensetzung von 6,4 % D₃, 82,8 % D₄, 1,30 % D₅, und 0,04 % D₆ sowie 0,14 % Ethanol (Summe der Siloxanzyklenanteile = 90,2%) zu. Die restlichen Bestandteile bestanden gemäß ²⁹Si-NMR-Spektroskopie aus Diethoxydimethylsilan und Diethoxytetramethyldisiloxan.

## Patentansprüche

1. Verfahren zur Depolymerisation von Abfallsilikonen zu Siloxanzyklen, **dadurch gekennzeichnet, dass** man
(a) in einem ersten Schritt mindestens ein Abfallsilikon unter Durchmischung mit mindestens einem Alkohol und mindestens einem Alkalimetallalkoholat unter Wärmeeintrag umsetzt, und zwar ohne Entfernung von etwaig auftretendem Wasser aus der Reaktionsmischung, insbesondere ohne den Einsatz inerter, wasserunlöslicher aber mit Wasser Azeotrope bildenden Solventien und/oder ohne den Einsatz weiterer, wasserentziehender Mittel, und
(b) danach das aus dieser Reaktion hervorgehende Reaktionsgemisch in einem zweiten Schritt mit Hilfe von mindestens einer Brönstedtsäure gegebenenfalls unter Hinzufügen von mindestens einem Solvens neutralisiert, die festen Bestandteile abtrennt, insbesondere abfiltriert, und dann das gegebenenfalls zuvor hinzugefügte Solvens sowie den aus dem Schritt (a) stammenden, überschüssigen Alkohol von dem oder den erhaltenen Alkoxysiloxanen abdestilliert und
(c) danach in einem dritten Schritt das oder die erhaltenen Alkoxysiloxane mit mindestens einem Fettalkohol und mindestens einem Alkalimetallalkoholat unter Durchmischung erwärmt und die dabei gebildeten Siloxanzyklen thermisch abtrennt, vorzugsweise destillativ abtrennt.

2. Verfahren nach Anspruch 1, **dadurch gekennzeichnet, dass** die Umsetzung in dem ersten Schritt (a) ohne die Verwendung wasserbindender Kieselsäureester, insbesondere ohne Einsatz von Tetraalkoxysilanen, vorgenommen wird.

3. Verfahren nach einem der Ansprüche 1 bis 2, **dadurch gekennzeichnet, dass** das mindestens eine Alkalimetallalkoholat der allgemeinen Formel [M⁺] [OR⁻] entspricht, wobei
M ausgewählt ist aus der Reihe der Alkalimetalle Li, Na oder K, bevorzugt Na oder K und
R einen linearen, verzweigten oder zyklischen Alkylrest, bevorzugt mit 1 bis 10 Kohlenstoffatomen, besonders bevorzugt mit 1 bis 6 Kohlenstoffatomen, ganz besonders bevorzugt mit 1 oder 2 Kohlenstoffatomen darstellt.

4. Verfahren nach einem der Ansprüche 1 bis 3, **dadurch gekennzeichnet, dass** der im ersten Schritt (a) eingesetzte mindestens ein Alkohol ausgewählt ist aus der Gruppe bestehend aus linearen, verzweigten und zyklischen C₁ bis C₁₀- Alkanolen, wobei vorzugsweise Methanol, Ethanol, 1-Propanol, Isopropanol, 1-Butanol, 2-Butanol, iso-Butanol, Pentanole, Hexanole, Heptanole, Octanole, Nonanole und/oder Dekanole, und/oder deren Isomere, eingesetzt werden, besonders bevorzugt werden Methanol und/oder Ethanol , wobei ganz besonders bevorzugt Ethanol eingesetzt wird.

5. Verfahren nach einem der Ansprüche 1 bis 4, **dadurch gekennzeichnet, dass** der im ersten Schritt (a) eingesetzte mindestens eine Alkohol in Gesamt-Mengen von 10 bis 200 Massen-%, bevorzugt 20 bis 100 Massen-%, besonders bevorzugt 30 bis 80 Massen-% bezogen auf die Gesamt-Masse des bei der Umsetzung insgesamt verwendeten Abfallsilikons eingesetzt wird.

6. Verfahren nach einem der Ansprüche 1 bis 5, **dadurch gekennzeichnet, dass** das im ersten Schritt (a) eingesetzte mindestens eine Alkalimetallalkoholat in einer Gesamt-Menge von 1 bis 20 Massen-%, bevorzugt von 5 bis 19 Massen-%, besonders bevorzugt von 6 bis 18 Massen-% bezogen auf die Gesamt-Masse des bei der Umsetzung insgesamt verwendeten Abfallsilikons eingesetzt wird.

7. Verfahren nach einem der Ansprüche 1 bis 6, **dadurch gekennzeichnet, dass** die in dem zweiten Schritt (b) hinzugefügte mindestens eine Brönstedtsäure eine wasserfreie Mineralsäure und/oder wasserfreie organische Säure, insbesondere wasserfreie Schwefelsäure, wasserfreie Perchlorsäure und/oder wasserfreie Essigsäure ist.

8. Verfahren nach einem der Ansprüche 1 bis 7, **dadurch gekennzeichnet, dass** in dem zweiten Schritt (b) mindestens ein Solvens hinzugefügt wird, vorzugsweise ausgewählt aus der Gruppe bestehend aus Alkanen, Alkylaromaten, Alkoholen, Hexamethylcyclotrisiloxan (D₃), Octamethylcyclotetrasiloxan (D₄), Dekamethylcyclopentasiloxan (D₅) und Dodekamethylcyclohexasiloxan (D₆).

9. Verfahren nach einem der Ansprüche 1 bis 8, **dadurch gekennzeichnet, dass** die Umsetzung des mindestens einen Abfallsilikons in dem ersten Schritt (a) bei Temperaturen zwischen 50°C und 200°C, bevorzugt zwischen 60°C und 180°C, insbesondere zwischen 78°C und 170°C vorgenommen wird.

10. Verfahren nach einem der Ansprüche 1 bis 9, **dadurch gekennzeichnet, dass** die Umsetzung des mindestens einen Abfallsilikons in dem ersten Schritt (a) über einen Zeitraum von 0,5 bis 12 Stunden, bevorzugt über einen Zeitraum von 1 bis 8 Stunden und/oder, vorzugsweise und, bei einem Druck größer 1.013,25 hPa und kleiner 12000 hPa durchgeführt wird.

11. Verfahren nach einem der Ansprüche 1 bis 10, **dadurch gekennzeichnet, dass** man den dritten Schritt (c) semikontinuierlich durchführt, indem man dem an Alkoxysiloxan und an Siloxanzyklen verarmenden oder verarmten, noch Fettalkohol und Alkalimetallalkoholat enthaltenden Destillationssumpf eine frische Menge an Alkoxysiloxan kontinuierlich oder portionsweise diskontinuierlich hinzufügt und die Bildung von Siloxanzyklen auf diese Weise erneut startet oder fortführt, und/oder, vorzugsweise und, dass man in dem dritten Schritt (c) eine Alkoxy-Si-Körper enthaltende Leichtsiederfraktion abtrennt und dem neuerlich anzufahrenden oder fortzuführenden ersten Schritt (a) zuführt.

12. Verfahren nach einem der Ansprüche 1 bis 11, **dadurch gekennzeichnet, dass** im dritten Schritt (c) mindestens ein Fettalkohol mit einer Kohlenstoffanzahl von vorzugsweise C₁₂ bis C₁₈, bevorzugt mit einer Kohlenstoffanzahl von C₁₄ bis C₁₈, ganz besonders bevorzugt mit einer Kohlenstoffanzahl von C₁₆, insbesondere Hexadecanol, eingesetzt wird.

13. Verfahren nach einem der Ansprüche 1 bis 12, **dadurch gekennzeichnet, dass** der mindestens eine im dritten Schritt (c) verwendete Fettalkohol in Gesamt-Mengen von 20 bis 50 Gewichtsprozent, bevorzugt in Mengen von 25 bis 35 Gewichtsprozent bezogen auf die vorliegende Gesamtmenge an Alkoxysiloxan eingesetzt wird.

14. Verfahren nach einem der Ansprüche 1 bis 13, **dadurch gekennzeichnet, dass** die im dritten Schritt (c) verwendete Menge Alkalimetallalkoholat 10 bis 20 Gewichtsprozent, bevorzugt zu 12 bis 18 Gewichtsprozent bezogen auf die Gesamt-Menge des mindestens einen im dritten Schritt (c) verwendeten Fettalkohols beträgt.

15. Verfahren nach einem der Ansprüche 1 bis 14, **dadurch gekennzeichnet, dass** der dritte Schritt (c) im Temperaturbereich von 100°C bis 200°C, bevorzugt im Temperaturbereich von 120°C bis 160°C und über einen Zeitraum von vorzugsweise 1 bis 12 Stunden, bevorzugt über einen Zeitraum von 2 bis 8 Stunden, vorzugsweise unter Anlegen eines Hilfsvakuums, bevorzugt mit einem Druckbereich kleiner als 300 hPa, insbesondere mit einem Druckbereich von 0,001 hPa bis 250 hPa, durchgeführt wird.

## Claims

1. Process for depolymerizing waste silicones to afford siloxane cycles, **characterized in that** the process comprises
(a) a first step of reacting at least one waste silicone by mixing with at least one alcohol and at least one alkali metal alkoxide with heating but without removing any potentially occurring water from the reaction mixture, in particular without the use of inert solvents which are water-insoluble but form azeotropes with water and/or without the use of further dehydrating agents and
(b) subsequently neutralizing the reaction mixture resulting from this reaction in a second step using at least one Brønsted acid optionally with addition of at least one solvent, removing, especially filtratively removing, the solid constituents and then distillatively removing the optionally previously added solvent and the excess alcohol deriving from step (a) from the obtained alkoxysiloxane(s) and
(c) subsequently in a third step heating the thus-obtained alkoxysiloxane(s) with at least one fatty alcohol and at least one alkali metal alkoxide with mixing and thermally removing, preferably distillatively removing, the siloxane cycles formed.

2. Process according to Claim 1, **characterized in that** the reaction in the first step (a) is undertaken without the use of water-binding silicic esters, in particular without the use of tetraalkoxysilanes.

3. Process according to either of Claims 1 to 2, **characterized in that** the at least one alkali metal alkoxide conforms to the general formula [M⁺] [OR⁻], wherein
M is selected from the group of alkali metals Li, Na or K, preferably Na or K,
and
R represents a linear, branched or cyclic alkyl radical, preferably having 1 to 10 carbon atoms, particularly preferably having 1 to 6 carbon atoms, very particularly preferably having 1 or 2 carbon atoms.

4. Process according to any of Claims 1 to 3, **characterized in that** the at least one alcohol employed in the first step (a) is selected from the group consisting of linear, branched and cyclic C₁ to C₁₀ alkanols, preferably methanol, ethanol, 1-propanol, isopropanol, 1-butanol, 2-butanol, isobutanol, pentanols, hexanols, heptanols, octanols, nonanols and/or decanols and/or the isomers thereof, particularly preferably methanol and/or ethanol, very particularly preferably ethanol.

5. Process according to any of Claims 1 to 4, **characterized in that** the at least one alcohol employed in the first step (a) is employed in total amounts of 10% to 200% by mass, preferably 20% to 100% by mass, particularly preferably 30% to 80% by mass, based on the total mass of the waste silicone altogether used in the reaction.

6. Process according to any of Claims 1 to 5, **characterized in that** the at least one alkali metal alkoxide employed in the first step (a) is employed in a total amount of 1% to 20% by mass, preferably from 5% to 19% by mass, particularly preferably from 6% to 18% by mass, based on the total mass of the waste silicone altogether used in the reaction.

7. Process according to any of Claims 1 to 6, **characterized in that** the at least one Brønsted acid added in the second process step (b) is an anhydrous mineral acid and/or anhydrous organic acid, in particular anhydrous sulfuric acid, anhydrous perchloric acid and/or anhydrous acetic acid.

8. Process according to any of Claims 1 to 7, **characterized in that** at least one solvent preferably selected from the group consisting of alkanes, alkylaromatics, alcohols, hexamethylcyclotrisiloxane (D₃), octamethylcyclotetrasiloxane (D₄), decamethylcyclopentasiloxane (D₅) and dodecamethylcyclohexasiloxane (D₆) is added in the second step (b).

9. Process according to any of Claims 1 to 8, **characterized in that** the reaction of the at least one waste silicone in the first step (a) is undertaken at temperatures between 50°C and 200°C, preferably between 60°C and 180°C, in particular between 78°C and 170°C.

10. Process according to any of Claims 1 to 9, **characterized in that** the reaction of the at least one waste silicone in the first step (a) is performed over a period of 0.5 to 12 hours, preferably over a period of 1 to 8 hours, and/or, preferably and, at a pressure above 1013.25 hPa and below 12000 hPa.

11. Process according to any of Claims 1 to 10, **characterized in that** the third step (c) is performed semicontinuously by adding to the distillation bottoms depleting or depleted in alkoxysilane and in siloxane cycles and still containing fatty alcohol and alkali metal alkoxide a fresh amount of alkoxysiloxane continuously or portionwise and discontinuously and thus restarting or continuing the formation of siloxane cycles and/or, preferably and, in the third step (c) removing a low boilers fraction containing alkoxy-Si structures and supplying it to the first step (a) that is to be restarted or continued.

12. Process according to any of Claims 1 to 11, **characterized in that** the third step (c) employs at least one fatty alcohol having a carbon number of preferably C₁₂ to C₁₈, preferably having a carbon number of C₁₄ to C₁₈, very particularly preferably having a carbon number of C₁₆, in particular hexadecanol.

13. Process according to any of Claims 1 to 12, **characterized in that** the at least one fatty alcohol used in the third step (c) is employed in total amounts of 20% to 50% by weight, preferably in amounts of 25% to 35% by weight, based on the total amount of alkoxysilane present.

14. Process according to any of Claims 1 to 13, **characterized in that** the amount of alkali metal alkoxide used in the third step (c) is 10% to 20% by weight, preferably 12% to 18% by weight, based on the total amount of the at least one fatty alcohol used in the third step (c).

15. Process according to any of Claims 1 to 14, **characterized in that** the third step (c) is performed in the temperature range of 100°C to 200°C, preferably in the temperature range of 120°C to 160°C, and over a period of preferably 1 to 12 hours, preferably over a period of 2 to 8 hours, preferably with application of an auxiliary vacuum, preferably at a pressure range below 300 hPa, in particular at a pressure range of 0.001 hPa to 250 hPa.

## Revendications

1. Procédé de dépolymérisation de silicones de rebut en cycles de siloxane, **caractérisé en ce que**
(a) dans une première étape, on fait réagir au moins une silicone de rebut en la mélangeant avec au moins un alcool et au moins un alcoolate de métal alcalin sous apport de chaleur, et ce sans éliminer l'eau éventuellement présente dans le mélange réactionnel, notamment sans utiliser de solvants inertes, insolubles dans l'eau mais formant des azéotropes avec l'eau, et/ou sans utiliser d'autres agents d'extraction d'eau, et
(b) puis, dans une deuxième étape, on neutralise le mélange réactionnel issu de cette réaction à l'aide d'au moins un acide de Brönstedt, éventuellement en ajoutant au moins un solvant, on sépare les constituants solides, notamment par filtration, puis on distille le solvant éventuellement ajouté précédemment ainsi que l'alcool en excès issu de l'étape (a) du ou des alcoxysiloxanes obtenus, et
(c) puis, dans une troisième étape, on chauffe le ou les alcoxysiloxanes obtenus avec au moins un alcool gras et au moins un alcoolate de métal alcalin en les mélangeant et on sépare thermiquement, de préférence on sépare par distillation, les cycles siloxanes ainsi formés.

2. Procédé selon la revendication 1, **caractérisé en ce que** la réaction est effectuée dans la première étape (a) sans utiliser d'esters d'acide silicique fixant l'eau, notamment sans utiliser de tétraalcoxysilanes.

3. Procédé selon l'une quelconque des revendications 1 à 2, **caractérisé en ce que** l'au moins un alcoolate de métal alcalin correspond à la formule générale [M⁺] [OR⁻], dans laquelle
M est choisi dans la série des métaux alcalins Li, Na ou K, de préférence Na ou K
et
R représente un radical alkyle linéaire, ramifié ou cyclique, de préférence de 1 à 10 atomes de carbone, de manière particulièrement préférée de 1 à 6 atomes de carbone, de manière tout particulièrement préférée de 1 ou 2 atomes de carbone.

4. Procédé selon l'une quelconque des revendications 1 à 3, **caractérisé en ce que** l'au moins un alcool utilisé dans la première étape (a) est choisi dans le groupe constitué par les alcanols linéaires, ramifiés et cycliques en C₁ à C₁₀ ; du méthanol, de l'éthanol, du 1-propanol, de l'isopropanol, du 1-butanol, du 2-butanol, de l'isobutanol, des pentanols, des hexanols, des heptanols, des octanols, des nonanols et/ou des décanols, et/ou leurs isomères étant utilisés de préférence, du méthanol et/ou de l'éthanol étant utilisé de manière particulièrement préférée, de manière tout particulièrement préférée de l'éthanol.

5. Procédé selon l'une quelconque des revendications 1 à 4, **caractérisé en ce que** l'au moins un alcool utilisé dans la première étape (a) est utilisé en des quantités totales de 10 à 200 % en masse, de préférence de 20 à 100 % en masse, de manière particulièrement préférée de 30 à 80 % en masse par rapport à la masse totale de la silicone de rebut utilisée au total lors de la réaction.

6. Procédé selon l'une quelconque des revendications 1 à 5, **caractérisé en ce que** l'au moins un alcoolate de métal alcalin utilisé dans la première étape (a) est utilisé en une quantité totale de 1 à 20 % en masse, de préférence de 5 à 19 % en masse, de manière particulièrement préférée de 6 à 18 % en masse, par rapport à la masse totale de la silicone de rebut utilisée au total lors de la réaction.

7. Procédé selon l'une quelconque des revendications 1 à 6, **caractérisé en ce que** l'au moins un acide de Brönstedt ajouté dans la deuxième étape (b) est un acide minéral anhydre et/ou un acide organique anhydre, notamment l'acide sulfurique anhydre, l'acide perchlorique anhydre et/ou l'acide acétique anhydre.

8. Procédé selon l'une quelconque des revendications 1 à 7, **caractérisé en ce que**, dans la deuxième étape (b), on ajoute au moins un solvant, de préférence choisi dans le groupe constitué par les alcanes, les alkylaromatiques, les alcools, l'hexaméthylcyclotrisiloxane (D₃), l'octaméthylcyclotétrasiloxane (D₄), le décaméthylcyclopentasiloxane (D₅) et le dodécaméthylcyclohexasiloxane (D₆).

9. Procédé selon l'une quelconque des revendications 1 à 8, **caractérisé en ce que** la réaction de l'au moins une silicone de rebut est effectuée dans la première étape (a) à des températures comprises entre 50 °C et 200 °C, de préférence entre 60 °C et 180 °C, notamment entre 78 °C et 170 °C.

10. Procédé selon l'une quelconque des revendications 1 à 9, **caractérisé en ce que** la réaction de l'au moins une silicone de rebut dans la première étape (a) est réalisée pendant une durée de 0,5 à 12 heures, de préférence pendant une durée de 1 à 8 heures et/ou, de préférence et, à une pression supérieure à 1 013,25 hPa et inférieure à 12 000 hPa.

11. Procédé selon l'une quelconque des revendications 1 à 10, **caractérisé en ce que** l'on réalise la troisième étape (c) de manière semi-continue, en ajoutant au fond de distillation appauvri ou appauvri en alcoxysiloxane et en cycles siloxanes, contenant encore de l'alcool gras et de l'alcoolate de métal alcalin, une quantité fraîche d'alcoxysiloxane, de manière continue ou discontinue par portions, et en redémarrant ou en poursuivant ainsi la formation de cycles siloxanes, et/ou, de préférence et, **en ce que**, dans la troisième étape (c), on sépare une fraction à bas point d'ébullition contenant des corps alcoxy-Si et on l'amène à la première étape (a) à redémarrer ou à poursuivre.

12. Procédé selon l'une quelconque des revendications 1 à 11, **caractérisé en ce que**, dans la troisième étape (c), on utilise au moins un alcool gras ayant un nombre de carbones de préférence de C₁₂ à C₁₈, de préférence un nombre de carbones de C₁₄ à C₁₈, de manière tout particulièrement préférée un nombre de carbones de C₁₆, notamment de l'hexadécanol.

13. Procédé selon l'une quelconque des revendications 1 à 12, **caractérisé en ce que** l'au moins un alcool gras utilisé dans la troisième étape (c) est utilisé en des quantités totales de 20 à 50 pour cent en poids, de préférence en des quantités de 25 à 35 pour cent en poids par rapport à la quantité totale d'alcoxysiloxane présente.

14. Procédé selon l'une quelconque des revendications 1 à 13, **caractérisé en ce que** la quantité d'alcoolate de métal alcalin utilisée dans la troisième étape (c) est de 10 à 20 pour cent en poids, de préférence de 12 à 18 pour cent en poids par rapport à la quantité totale de l'au moins un alcool gras utilisé dans la troisième étape (c).

15. Procédé selon l'une quelconque des revendications 1 à 14, **caractérisé en ce que** la troisième étape (c) est réalisée dans la plage de température de 100 °C à 200 °C, de préférence dans la plage de température de 120 °C à 160 °C et pendant une durée de préférence de 1 à 12 heures, de préférence pendant une durée de 2 à 8 heures, de préférence en appliquant un vide auxiliaire, de préférence avec une plage de pression inférieure à 300 hPa, notamment avec une plage de pression de 0,001 hPa à 250 hPa.
